Europäisches Patentamt

European Patent Office

Office européen des brevets

(19)

(11) Veröffentlichungsnummer: **0 041 161**
**B1**

(12) **EUROPÄISCHE PATENTSCHRIFT**

(45) Veröffentlichungstag der Patentschrift:
**25.05.83**

(21) Anmeldenummer: **81103690.4**

(22) Anmeldetag: **13.05.81**

(51) Int. Cl.³: **A 01 G 9/24, F 24 J 3/00**

(54) Vorrichtung zur Temperierung von Pflanzenkulturen.

(30) Priorität: **29.05.80 DE 3020460**

(43) Veröffentlichungstag der Anmeldung:
**09.12.81 Patentblatt 81/49**

(45) Bekanntmachung des Hinweises auf die Patenterteilung:
**25.05.83 Patentblatt 83/21**

(84) Benannte Vertragsstaaten:
**AT CH DE LI SE**

(56) Entgegenhaltungen:
**DE-A-2 501 796**
**FR-A-2 421 552**
**GB-A-1 416 036**

(73) Patentinhaber: **Beckmann, Gerhard,
Simoniusstrasse 10, D-7988 Wangen / Allgäu (DE)**

(72) Erfinder: **Beckmann, Gerhard, Simoniusstrasse 10,
D-7988 Wangen / Allgäu (DE)**

(74) Vertreter: **Grupe, Peter, Dipl.-Ing. et al,
Patentanwaltsbüro
Tiedtke-Bühling-Kinne-Grupe-Pellmann Bavariaring 4,
D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Vorrichtung zur Temperierung von Pflanzenkulturen

Die Erfindung bezieht sich auf eine Vorrichtung zur Temperierung von Pflanzenkulturen, gemäß dem Oberbegriff des Patentanspruchs 1.

Aufgrund der kleinen Wärmeträgheit eines Gewächshauses ist es insbesondere im Frühjahr und im Herbst erforderlich, Zusatzvorrichtungen vorzusehen, um die Pflanzenkulturen zu temperieren. Aus der FR-A1-2 421 552 ist eine Vorrichtung oben bezeichneter Art bekannt, mit der Jungpflanzen vor Frost geschützt werden können. Hierbei sind Speicherbehälter in Form von verschließbaren Flaschen vorgesehen, die mit einem Wärmespeicherstoff besonderer chemischer Zusammensetzung gefüllt sind. Die Flaschenbehälter werden zur Sicherstellung einer ausreichenden Wärmeübertragungsleistung möglichst dicht zwischen den Jungpflanzen auf die Erde gestellt, wodurch sie tagsüber über ihre gesamte Oberfläche Wärme des Treibhauses aufnehmen sollen, die sie dann nachts wieder abstrahlen. Diese mit Wärmespeicherstoff besonderer chemischer Zusammensetzung gefüllten Flascheneinheiten wirken nur örtlich sehr begrenzt. Weil sie lediglich indirekt über die Gewächshaustemperatur aufgeheizt werden, muß ferner ihre Oberfläche im Verhältnis zum Volumen sehr groß gehalten sein. Um mit der vorgegebenen Flaschenform eine Temperierungsvorrichtung mit großer Speicherkapazität pro Flächeneinheit bereitzustellen, muß daher eine äußerst große Anzahl von Flaschen innerhalb der Pflanzenkulturanlage verteilt werden, so daß neben der damit verbundenen Einengung der Pflanzfläche innerhalb des Gewächshauses der Arbeitsaufwand bei der Installation und der Kostenaufwand relativ groß wird.

Der Erfindung liegt die Aufgabe zugrunde, eine Vorrichtung gemäß dem Oberbegriff des Patentanspruchs 1 zu schaffen, die bei Sicherstellung einer größtmöglichen Wärme-Speicherkapazität pro Flächeneinheit universell und leicht installierbar und so aufgebaut ist, daß sie die Platzaufteilung der Pflanzenkulturanlage nicht beeinträchtigt, so daß sie dem Pflanzenzüchter ein Höchstmaß an Flexibilität bezüglich des Anbauraums innerhalb seiner Kulturanlage beläßt.

Diese Aufgabe wird durch die im kennzeichnenden Teil des Patentanspruchs 1 angegebenen Merkmale gelöst.

Weil erfindungsgemäß Wärmespeicher in Form von beliebig zuschneidbaren Schlauchstücken zur Anwendung kommen, die lediglich einmal mit Wärmespeicherstoff gefüllt und endseitig lösbar verschlossen werden müssen, ergibt sich ein Vorrichtungsaufbau, der dem Pflanzenzüchter in bezug auf die Raumaufteilung innerhalb der Pflanzenkulturanlage ein Höchstmaß an Flexibilität sichert. Die Folienschlauchstücke sind äußerst einfach von einem Folienschlauchvorrat in einer, dem jeweiligen Kulturreihenabschnitt angepaßten Länge abtrennbar und können somit, ohne daß hierfür eine besondere Geschicklichkeit notwendig ist, individuell und voneinander getrennt verlegt und gehandhabt werden. Die Schlauchform des den Wärmespeicherstoff aufnehmenden Behälters sorgt auf der einen Seite dafür, daß die Wärmeabgabeleistung von der solarbeheizten Schlauchanordnung zur Pflanze hoch genug ist, um für eine wirksame Temperierung und für einen Frostschutz zu sorgen, und sie stellt andererseits sicher, daß der Abstand der Kulturreihen relativ klein gehalten werden kann, so daß praktisch die gesamte in das Erdreich eindringende Wärmemenge in den Wurzelbereich der Jungpflanzen gelangen kann. Ferner wird durch die erfindungsgemäßen Maßnahmen die Platzaufteilung innerhalb des Gewächshauses nur unwesentlich berührt, weil die einzelnen Schlauchstücke an jeder Stelle innerhalb des Gewächshauses ohne großen montage- und vorrichtungstechnischen Aufwand ausgelegt werden können. Die besondere erfindungsgemäße Formgebung der Speicherbehälter sorgt daher bei minimalem herstellungs- und montagetechnischem Aufwand für eine zuverlässige Temperierung des Gewächshauses, da aufgrund der strahlungsabsorbierenden Eigenschaft der Folie ein hohes Maß an Sonnen-Strahlungsenergie direkt aufgenommen wird. Die Schlauchstücke schmiegen sich ferner selbst an unebenen Boden eng an, so daß die Wärmeeinleitung in den Boden möglichst verlustlos erfolgt. Dabei ergibt sich darüber hinaus der zusätzliche Vorteil, daß die erfindungsgemäße Schlauchform im gefüllten Zustand zu einem Temperierungskörper etwa kreisförmigen Querschnitts führt, der dann sehr effektiv arbeitet, wenn er in einer Mulde zwischen zwei Kulturreihen liegt. In dieser Anordnung wird die Platzaufteilung im Gewächshaus nahezu nicht beeinträchtigt und es wird gleichzeitig dafür gesorgt, daß die Wärme bestmöglich an die Pflanzen abgegeben wird.

Besonders vorteilhaft ist es, wenn der Folienschlauch schwarz ist, weil auf diese Weise ein optimales Wärmeabsorptionsvermögen gegeben ist.

Wasser als Wärmespeicherstoff ist insofern vorteilhaft, als es überall zur Verfügung steht und insbesondere beim Abbau der Vorrichtung im Herbst an Ort und Stelle abgelassen werden kann.

Hinsichtlich der speicherbaren Wärmemenge günstiger ist ein Wärmespeicherstoff, der im Einsatz-Temperaturbereich seinen Umwandlungspunkt zwischen fester und flüssiger Phase besitzt. Auf diese Weise wird während der Wärmeabgabephase beim Übergang vom flüssigen in den festen Aggregatzustand die gesamte Schmelzwärme des Stoffes frei, was mit Wasser als Wärmespeicherstoff naturgemäß nicht erreichbar ist. Zur Ausnutzung dieses Effekts ist als Wärme-Speicherstoff zweckmäßig Paraffin vorgesehen.

Das Merkmal gemäß Unteranspruch 7 vereinfacht das Auslegen und Füllen der Schlauchstükke und reduziert die Zahl der Verschlußeinrichtungen, wodurch die Wirtschaftlichkeit der erfindungsgemäßen Temperierungsvorrichtung zusätzlich angehoben werden kann.

Eine sehr einfache und vollkommen dichte Einrichtung für den endseitigen Verschluß der Schlauchstücke ergibt sich mit einer Abklemmeinrichtung. Ein solcher Verschluß hat den besonderen Vorteil, daß das Schlauchstück selbst durch den Verschlußvorgang in keiner Weise beschädigt bzw. umgestaltet wird, so daß es wiederholt gefüllt und in Betrieb genommen werden kann, ohne daß die Gefahr besteht, daß die Randbereiche ermüden.

Die Weiterbildung gemäß Unteranspruch 9 führt zu einer besonders vorteilhaften Abklemmeinrichtung, die als einziges zusätzliches Element einen Ring benötigt. Diese Abklemmeinrichtung zeichnet sich insbesondere dadurch aus, daß sie mit einfachen Handgriffen herstellbar ist und gleichzeitig vollkommen zuverlässig arbeitet. Der mit dieser Abklemmeinrichtung herstellbare lösbare Verschluß ist absolut dicht, wobei er den zusätzlichen Vorteil besitzt, daß er die Handhabbarkeit der gefüllten Schlauchstükke in keiner Weise einengt. So können die mit einer derartigen Abklemmeinrichtung verschlossenen gefüllten Schlauchstücke beliebig transportiert und je nach Bedarf auch an andere Stellen verlegt werden, ohne daß irgendwelche zusätzlichen Handgriffe notwendig werden, um das Auslaufen des Wärmespeicherstoffs zu verhindern. Die Handhabungsflexibilität der Temperierungsvorrichtung wird zusätzlich dadurch erweitert, daß diese Abklemmeinrichtung keinen zusätzlichen Raum benötigt, der von der Pflanzfläche abgezogen werden müßte; weil die Handhabung der Schlauchstücke so unkompliziert und einfach ist, kann man diese untertags sogar je nach Belieben ins Freie ziehen bzw. tragen, um sie der Sonnenstrahlung noch wirksamer auszusetzen und die Aufheizzeit zu verkürzen.

Wenn der Ring aus Kunststoff besteht, wird einerseits das Aufschieben auf den Randbereich und somit die Herstellung der Abklemmeinrichtung erleichtert und es wird ferner die Beschädigungsgefahr des Schlauchstücks sehr klein gehalten.

Die Isolierung des Folienschlauchs mit strahlungsdurchlässigem Material gemäß den Unteransprüchen 11 und 12 erhöht einerseits die tagsüber erreichbare Temperatur des Wärmespeicherstoffs, während andererseits die nächtliche Abgabe der tagsüber gespeicherten Wärmemenge über einen längeren Zeitraum gestreckt wird, so daß insbesondere noch kurz vor Sonnenaufgang, der bekanntlich kältesten Periode der Nacht, genügend Energie zur Verfügung steht.

Es hat sich gezeigt, daß Folienschläuche mit einem Durchmesser von 50 mm bis 90 mm deshalb besonders vorteilhaft sind, weil sie bei sehr kleinem Raumbedarf eine vollkommen ausreichende Temperierungsleistung gewährleisten.

Nachstehend werden anhand schematischer Zeichnungen mehrere Ausführungsbeispiele der Erfindung näher erläutert. Es zeigt

Fig. 1 eine perspektivische Ansicht eines Folientunnels mit einer ersten Ausführungsform der Temperierungsvorrichtung,

Fig. 2 eine vergrößerte Darstellung eines Folienschlauchstücks,

Fig. 3 eine perspektivische Ansicht einer Abwandlung der Temperierungsvorrichtung,

Fig. 4 einen Schnitt durch eine Kulturreihe in einem Folientunnel,

Fig. 5 ein Diagramm, das die Wassertemperatur und die Lufttemperaturen außerhalb des Folientunnels und in unmittelbarer Nähe der Jungpflanzen gegenüberstellt, und

Fig. 6 einen Schnitt durch ein isoliertes Folienschlauchstück.

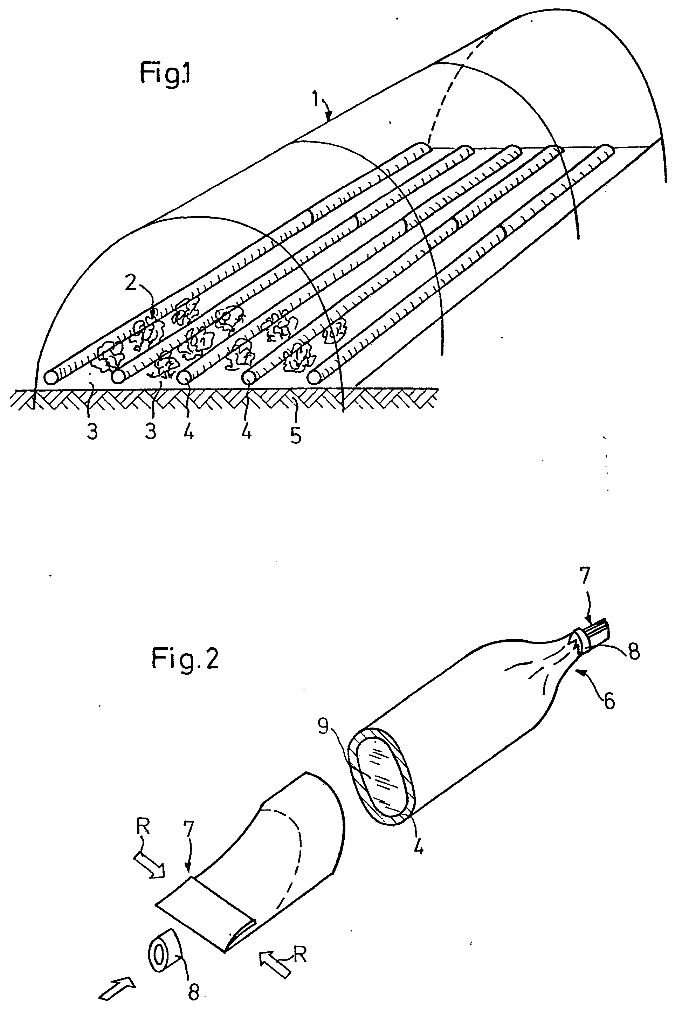

Fig. 1 zeigt einen Folientunnel 1, in dem eine Pflanzenkultur 2 in Kulturreihen 3 angeordnet ist. Zwischen den Kulturreihen 3 sind mit einem wärmespeichernden Medium oder Stoff, wie z. B. Wasser oder Paraffin gefüllte Schlauchstükke 4 aus schlaffem Folienschlauch auf dem Erdboden 5 verlegt. Der Folienschlauch besteht aus schwarzer Kunststoffolie, die die Sonnenstrahlung absorbiert und diese an den wärmespeichernden Stoff weiterleitet. Die vom wärmespeichernden Stoff gespeicherte Wärme wird nachts an die Pflanzen 2 langsam abgegeben. Das Schlauchstück strahlt dabei in allen Richtungen Wärme ab und leitet eine zusätzliche Wärmemenge in den Boden 5 zu den Wurzeln der Pflanzen. In Fig. 1 besteht der Folienschlauch aus Schlauchstücken, deren Länge im wesentlichen der des Folientunnels 1 entspricht. Es ist jedoch auch möglich, die Schlauchstücke in einer anderen Konfiguration zu verlegen.

Die Schlauchstücke 4 sind an ihren Enden 7 mittels einer, in der Fig. 2 gezeigten Abklemmeinrichtung 6 verschlossen. Das Schlauchstück 4 wird hierzu zunächst an einem Ende mindestens einmal umgeschlagen und entsprechend den Pfeilen R so zusammengerafft oder gefaltet, daß auf das Ende 7 ein Ring 8 aufgeschoben werden kann. Nach Füllen des Schlauchstücks 4 mit dem wärmespeichernden Stoff 9 wird dieser Vorgang am anderen Ende des Schlauchstücks 4 wiederholt. Um zu verhindern, daß Luft im Schlauchstück eingeschlossen wird, hebt man geeigneterweise das zuletzt zu verschließende Ende an.

Die Schlauchstücke werden so als abgeschlossene und flexible Wärmespeicher, die sich jeder Bodenunebenheit anpassen, auf dem Boden ausgelegt. Diese Wärmespeichereinheiten sind leicht beweglich und handhabbar und können sogar am Tage ins Freie gelegt werden, um sie dadurch noch wirksamer mit Strahlungsenergie aufzuladen.

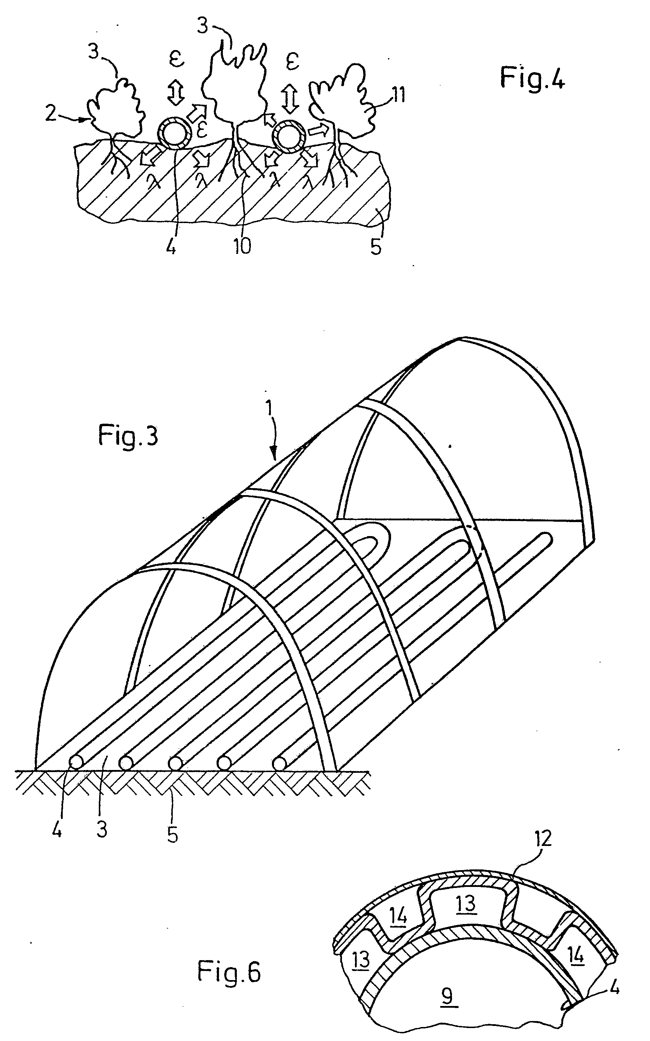

Fig. 3 zeigt eine weitere Möglichkeit, die Schlauchstücke 4 auf der Erde in einem Folientunnel 1 zu verlegen. Dabei werden mehrere zu einem U gelegte Schlauchstücke um die Kulturreihen 3 herumgeführt. Auf diese Weise werden Abklemmeinrichtungen gespart, und das Auffüllen der Schlauchstücke, d. h. die Inbetriebnahme der Temperierungsvorrichtung nimmt weniger Zeit in Anspruch, da die Enden der Schlauchstücke auf gleicher Höhe nebeneinanderliegen.

Fig. 4 deutet schematisch die Wärmehaushaltsverhältnisse zwischen den Kulturreihen 3 an. Die Schlauchstücke 4, die sich mittig zwischen den Kulturreihen 3 befinden, nehmen tagsüber durch Strahlung — durch ε angedeutet — Wärme auf. Dieser Strahlung ausgesetzte Oberfläche des Schlauchstücks ist so groß, daß eine ausreichende Erwärmung des Wärme-Speicherstoffs 9 gewährleistet ist. In der Nacht gibt das Schlauchstück 4 durch Strahlung — durch ε angedeutet — Wärme an die Umgebung ab. Ein großer Teil der gespeicherten Wärmemenge gelangt ferner durch Wärmeleitung — durch λ angedeutet — zu den Wurzeln 10 der Pflanzen 2. Die Strahlung der Schlauchstücke und die durch Konvektion an die Blätter 11 abgegebene Wärmemenge sorgen dafür, daß an den Blättern 11 keine Kondensationserscheinungen auftreten und die Pflanzen somit vor Frost genügend geschützt sind.

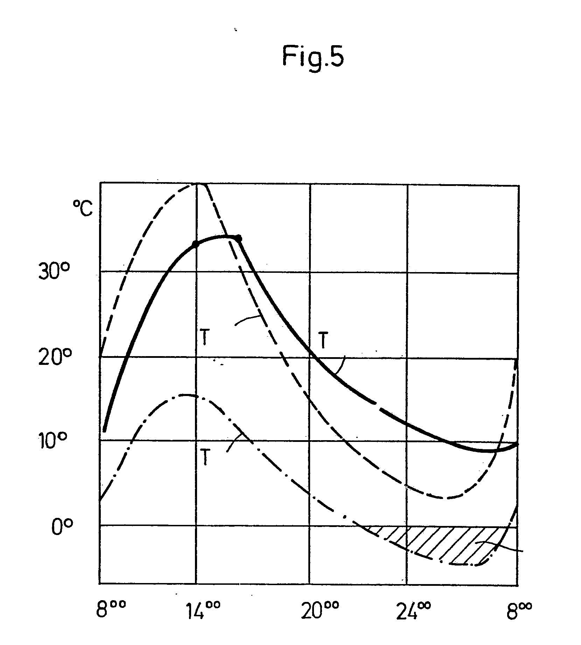

Fig. 5 zeigt ein Diagramm von Meßergebnissen, die mit der beschriebenen Temperierungsvorrichtung erzielt wurden. Es wurden hierzu im Frühling Messungen in einem Gewächshaus durchgeführt, wobei die Temperaturen im Gewächshaus (in kurzer Entfernung von den Jungpflanzen), die Außentemperatur und die Wassertemperatur im Schlauchstück aufgezeichnet wurden. Man erkennt aus dem Diagramm der Fig. 5 deutlich, daß mit der beschriebenen Temperierungsvorrichtung selbst bei niedrigen Außentemperaturen (die Tageshöchsttemperatur betrug ca. 15°C) und bei relativ starkem, bereits um ca. 22 Uhr beginnendem und bis ca. 6 Uhr andauerndem Nachtfrost die Temperatur im Folientunnel nahe der Pflanzen wesentlich über der Frosttemperatur (um 4°C) gehalten werden konnte. Damit wird gezeigt, daß mit der beschriebenen Temperierungsvorrichtung gerade im Frühling oder in den Übergangsmonaten im Herbst, wenn die Sonne bereits oder noch eine ausreichende Strahlungsintensität besitzt, ein wirksamer Schutz der Pflanzenkulturen erreicht werden kann.

Fig. 6 zeigt eine Möglichkeit, die Effektivität der Beheizung bzw. Temperierung zusätzlich zu erhöhen. Um die Schlauchstücke 4 ist zu diesem Zweck eine Luftpolsterfolie 12 gelegt, die der Strahlung keinen Widerstand bietet und die aufgrund der Abschirmung von im Gewächshaus auftretenden Luftzirkulationen dazu beiträgt, die Temperatur des Wärmespeicherstoffs zu erhöhen. Die Luftpolster 14 der Luftpolsterfolie und der Luftraum 13 zwischen der Luftpolsterfolie 12 und dem Schlauchstück 4 sorgen dafür, daß nachts die Wärmeabgabe über einen längeren Zeitraum erstreckt erfolgen kann und daß somit auch noch kurz vor Sonnenaufgang, der bekanntlich kältesten Periode der Nacht, noch genügend Energie zum Schutz der Pflanzen vorhanden ist.

Im Herbst kann die Temperierungsvorrichtung auf einfache Weise außer Betrieb gesetzt werden. Wenn die Abklemmeinrichtungen gelöst sind, läuft der wärmespeichernde Stoff, z. B. Wasser, aus den Schlauchstücken unter Bildung eines Unterdrucks in den Schlauchstücken aus, so daß diese leicht zusammengerollt werden können und für den Einsatz im nächsten Frühling wieder zur Verfügung stehen.

## Patentansprüche

1. Vorrichtung zur Temperierung von Pflanzenkulturen in Gewächshäusern, Folientunneln (1) oder dgl. in Form von lösbar verschlossenen Behältern, die mit einem Wärmespeicherstoff großer Wärmekapazität gefüllt und zwischen den Kulturreihen angeordnet sind, dadurch gekennzeichnet, daß die Behälter endseitig lösbar verschlossene Schlauchstücke (4) sind, die aus strahlungsabsorbierender Folie bestehen.

2. Vorrichtung nach Anspruch 1, dadurch gekennzeichnet, daß der Folienschlauch schwarz ist.

3. Vorrichtung nach Anspruch 1 oder 2, dadurch gekennzeichnet, daß der Wärmespeicherstoff (9) Wasser ist.

4. Vorrichtung nach Anspruch 1 oder 2, dadurch gekennzeichnet, daß der Wärmespeicherstoff (9) im Einsatz-Temperaturbereich seinen Umwandlungspunkt zwischen fester und flüssiger Phase besitzt.

5. Vorrichtung nach Anspruch 4, dadurch gekennzeichnet, daß der Wärmespeicherstoff (9) Paraffin ist.

6. Vorrichtung nach Anspruch 1 bis 5, dadurch gekennzeichnet, daß die Schlauchstücke (4) die Länge einer Kulturreihe (3) besitzen.

7. Vorrichtung nach Anspruch 1 bis 5, dadurch gekennzeichnet, daß die Schlauchstücke (4) die Länge eines eine Kulturreihe (3) umschließenden U besitzen.

8. Vorrichtung nach einem der Ansprüche 1 bis 7, dadurch gekennzeichnet, daß jedes Schlauchstück (4) mittels einer Abklemmeinrichtung (6) verschlossen ist.

9. Vorrichtung nach Anspruch 8, dadurch gekennzeichnet, daß die Abklemmeinrichtung (6) einen Ring (8) aufweist, der über einen mindestens einmal eingeschlagenen und gerafften oder gefalteten Endabschnitt (7) des Schlauchstücks (4) aufschiebbar ist.

10. Vorrichtung nach Anspruch 9, dadurch gekennzeichnet, daß der Ring (8) aus Kunststoff besteht.

11. Vorrichtung nach einem der Ansprüche 1 bis 10, dadurch gekennzeichnet, daß die Schlauchstücke (4) mit einem strahlungsdurchlässigen Material (12) wärmeisoliert sind.

12. Vorrichtung nach Anspruch 11, dadurch gekennzeichnet, daß das strahlungsdurchlässige Material eine Luftpolsterfolie (12) ist.

13. Vorrichtung nach einem der Ansprüche 1 bis 12, dadurch gekennzeichnet, daß der Folienschlauch einen Durchmesser von 50 mm bis 90 mm besitzt.


**Claims**


1. An apparatus for tempering growing plants in greenhouses, foil tunnels (1) or the like, in form of containers closed in detachable manner which are filled with a heat accumulating material having a great heat capacity and which are arranged between the growing rows, characterized in that the containers are hose units (4) closed at the end in detachable manner and consisting of radiation absorbing foil.

2. An apparatus according to claim 1, characterized in that the foil hose is black.

3. An apparatus according to claims 1 or 2, characterized in that the heat accumulating material (9) is water.

4. An apparatus according to claims 1 or 2, characterized in that the transition point of the heat accumulating material (9) between the solid and the liquid phase is lying in the operating temperature range.

5. An apparatus according to claim 4, characterized in that the heat accumulating means (9) in paraffin.

6. An apparatus according to claims 1 to 5, characterized in that the hose units (4) have the length of a growing row (3).

7. An apparatus according to claims 1 to 5, characterized in that the hose units (4) have the lenght of a U surrounding a growing row (3).

8. An apparatus according to one of the claims 1 to 7, characterized in that each hose unit (4) is closed by a clamping means (6).

9. An apparatus according to claim 8, characterized in that the clamping device (6) is provided with a ring (8) which can be slipped over an end portion (7) of the hose unit (4) which is folded back at least once and pressed together or folded in.

10. An apparatus according to claim 9, characterized in that the ring (8) consists of synthetic material.

11. An apparatus according to one of the claims 1 to 10, characterized in that the hose units (4) are heat insulated with a material permeable to radiation (12).

12. An apparatus according to claim 11, characterized in that the material permeable to radiation is an air cushion foil (12).

13. An apparatus according to one of the claims 1 to 12, characterized in that the diameter of the foil hose ranges between 50 mm and 90 mm.


**Revendications**


1. Dispositif pour tempérer des cultures de plantes en serres, sous des tunnels en feuille ou des choses semblables, sous forme de récipients fermés dissolublement qui sont remplis d'un matériel ayant la fonction d'un accumulateur de calories avec une grande capacité calorifique, et qui sont posés entre les rangées de la culture, caractérisé en ce que les récipients sont des pièces de tuyau flexible fermées aptes à être ouvertes au bout, les récipients étant composés de feuille absorbant la radiation.

2. Dispositif selon la revendication 1, caractérisé en ce que le tuyau flexible en feuille est noir.

3. Dispositif selon l'une quelconque des revendications 1 ou 2, caractérisé en ce que le matériel ayant la fonction d'un accumulateur de calories (9) est de l'eau.

4. Dispositif selon l'une quelconque des revendications 1 ou 2, caractérisé en ce que le point de transition du matériel ayant la fonction d'un accumulateur de calories (9) entre la phase solide et la phase liquide se trouve dans le cadre des températures de service.

5. Dispositif selon la revendication 4, caractérisé en ce que le matériel ayant la fonction d'un accumulateur de calories (9) est de la paraffine.

6. Dispositif selon l'une quelconque des revendications 1 à 5, caractérisé en ce que les pièces de tuyau flexible (4) ont la longueur d'une rangée de culture (3).

7. Dispositif selon l'une quelconque des revendications 1 à 5, caractérisé en ce que les pièces de tuyau flexible (4) ont la longueur d'une U entourant une rangée de culture (3).

8. Dispositif selon l'une quelconque des revendications 1 à 7, caractérisé en ce que toute pièce de tuyau flexible (4) est fermée par un dispositif de serrage (6).

9. Dispositif selon la revendication 8, caractérisé en ce que le dispositif de serrage (6) comporte une bague (8) qui peut être dépassée sur un bout (7) de la pièce de tuyau flexible (4) enroulé une fois au minimum et serré ou pliée.

10. Dispositif selon la revendication 9, caractérisé en ce que la bague (8) est composée de matière synthétique.

11. Dispositif selon l'une quelconque des revendications 1 à 10, caractérisé en ce que les pièces de tuyau flexible (4) sont isolées par un matériel perméable à la radiation (12).

12. Dispositif selon la revendication 11, caractérisé en ce que le matériel perméable à la radiation est une feuille ayant des cuissons d'air (12).

13. Dispositif selon l'une quelconque des revendications 1 à 12, caractérisé en ce que le tuyau flexible en feuille a un diamètre allant de 50 mm à 90 mm.

Fig.1

Fig.2

Fig.4

Fig.3

Fig.6

# Fig.5